# EUROPEAN PATENT APPLICATION

(11) **EP 4 464 161 A1**
(43) Date of publication of application: **20.11.2024**
(21) Application number: 24175946.3
(22) Date of filing: 15.05.2024
(51) Int. Cl.: A21C 9/08, A21C 15/00

(54) **SYSTEM FOR THE PREPARATION OF FILLED BISCUITS, AND CORRESPONDING OPERATING PROCESS**

(30) Priority: 18.05.2023 IT 202300010095
(71) Applicant: Soremartec S.A., 2633 Senningerberg (LU)
(72) Inventor: MOLLO, Marco, 12051 Alba (CN) (IT); ARAGONE, Giovanni, 12051 Alba (CN) (IT); PUSCEDDU, Roberta, 12051 Alba (CN) (IT)
(74) Representative: Buzzi, Notaro & Antonielli d'Oulx S.p.A.

(57) **Abstract**

Described herein is a system (10) for the preparation of a filled biscuit, comprising:
- a forming unit (20) for forming biscuit bodies (102) in series, with a biscuit dough (101);
- a conveying system (40) for feeding the biscuit bodies (102) along a production path (K);
- an oven (30) for baking said biscuit bodies (102), which is traversed by said conveying system (40) and is configured to subject said biscuit bodies (102) to a baking process, while the biscuit bodies (102) are fed along said conveying system (40); and
- an injection unit (80), which is set downstream of said oven (30) with reference to said production path (K) and comprises a plurality of needles (88) for injecting a filling (104) simultaneously into a plurality of said biscuit bodies (102) arranged on said conveying system (40).

## Description

The present invention relates to a system for the preparation of filled biscuits.

Known in the art are systems for the preparation of filled biscuits that comprise means for forming biscuit bodies from a biscuit dough, means for baking the biscuit bodies, and means for depositing a filling on the biscuit bodies after the baking step. The aforesaid means for depositing a filling comprise nozzles for delivery of the filling onto the biscuit bodies. The means for forming the biscuit bodies may be configured for providing planar biscuit bodies on which the filling is overlaid to form a layer, or else for providing biscuit bodies with respective cavities, within which the filling is deposited. Moreover, usually the means for forming the biscuit bodies are also configured for forming further biscuit bodies that are then laid on the aforesaid biscuit bodies where the filling has already been deposited so as to obtain a biscuit structure in which the filling is contained between two biscuit bodies.

Also known in the art are systems comprising means for co-extruding a biscuit body and a filling, usually according to an arrangement such that the filling is contained inside the biscuit body, and means for then baking the biscuit body together with the corresponding filling. For applications with systems of this type there necessarily has to be used a thermostable filling that will not be altered by the baking process. The possibilities of filling of the biscuit are hence, in this case, extremely limited.

In the above context, the object of the present invention is to provide an industrial system for the preparation of filled biscuits that is of a type different from the preparation afforded by systems of a known type.

In particular, the present invention regards a system according to claim 1 and a process according to claim 13.

The claims form an integral part of the teaching provided herein.

Further characteristics and advantages of the present invention will emerge clearly from the ensuing description, with reference to the annexed drawings, which are provided purely by way of non-limiting example and in which:
- Figure 1 is a schematic illustration of an example of the system described herein;
- Figure 2 represents in greater detail a filling station of the system of Figure 1;
- Figures 3A-3E are schematic illustrations of successive operating steps of the filling station of Figure 2; and
- Figure 4 represents an example of biscuit obtained by the system described herein.

In the ensuing description, various specific details are illustrated aimed at enabling an in-depth understanding of the embodiments. The embodiments may be obtained without one or more of the specific details, or with other methods, components, materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As mentioned above, the present invention regards a system for the preparation of filled biscuits. In particular, the present invention regards preparation of a type of biscuit containing a filling applied through a step of injection via needles.

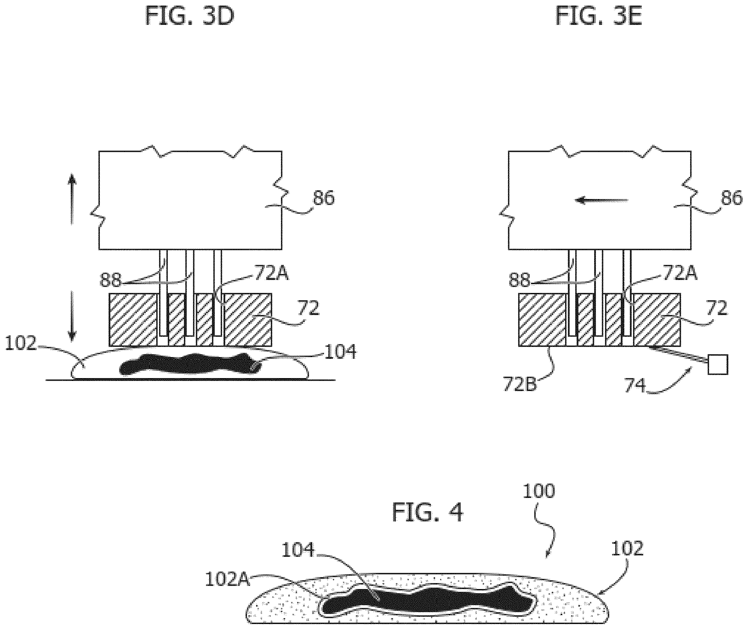

In this connection, Figure 4 illustrates an example of filled biscuit that can be obtained via the system described herein. The biscuit illustrated in Figure 4 - designated as a whole by the reference number 100 - comprises a biscuit body 102 formed inside which is a cavity 102A containing a filling 104. It should be noted that the cavity 102A is completely closed on the outside by the biscuit body 102 that surrounds the aforesaid cavity without any discontinuity.

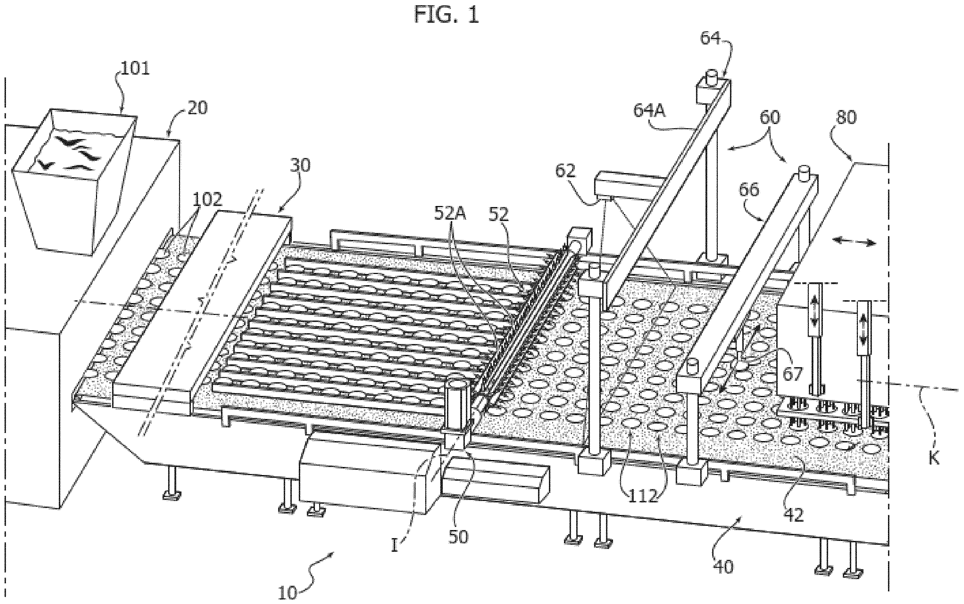

With reference now to Figure 1, the system illustrated therein - designated as a whole by the reference number 10 - comprises:
- a forming unit 20 for forming biscuit bodies 102 in series from a biscuit dough 101;
- a conveying system 40 for feeding the biscuit bodies 102 along a production path K;
- an oven 30 for baking the biscuit bodies 102; and
- an injection unit 80, set downstream of the oven 30 with reference to the production path K, for injecting the filling 104 inside the biscuit bodies 102.

As will be seen in what follows, the injection unit 80 comprises a plurality of needles 88 for perforating simultaneously a plurality of biscuit bodies 102 arranged on the conveying system 40 and injecting the filling 104 into them.

The forming unit 20 may be of any type known in the art for the formation of biscuit bodies. For instance, the forming unit 20 may be configured for the formation of the biscuit bodies 102 inside mould cavities that are to receive the biscuit dough, bestowing a predefined shape thereon. The forming unit 20 may, for example, be of the type described in the patent EP 3549447 B1 filed in the name of the present applicant.

In an alternative embodiment, the forming unit 20 may, instead, be configured for forming the biscuit bodies 102 through a first, rolling, step, in which from the biscuit dough there is obtained a continuous sheet of biscuit dough, and through a second, cutting, step, in which from the same sheet of biscuit dough the biscuit bodies 102 are separated. In this case, the forming unit may, for example, comprise a rolling and cutting system as described in the document WO2018/096420 A1.

In yet a further alternative embodiment, the forming unit 20 may, instead, be configured for forming the biscuit bodies 102 through a process of extrusion of the biscuit dough and of cutting of the extruded dough (for example, via wire cutting) to obtain the individual biscuit bodies 102.

The conveying system 40 is configured for receiving the biscuit bodies 102 from the forming unit 20 and feeding them along the production path K.

In one or more preferred embodiments like the one illustrated, the conveying system 40 comprises a succession of conveyor belts 42 on which the biscuit bodies 102 rest in a free state, without being constrained in a specific position. However, in the example illustrated a single conveyor belt 42 is represented for ease of illustration.

The aforesaid configuration of the conveying system affords the advantage of bestowing upon the system considerable versatility in so far as the biscuit bodies 102 may be variously arranged on the conveyor belts 42 according to the requirements of the specific applications.

Preferably, during operation, the conveying system 40 gets the biscuit bodies 102 to advance according to a continuous movement.

In one or more preferred embodiments like the one illustrated, the oven 30 extends longitudinally along the production path K and is traversed by the conveyor belt 42 so as to subject the biscuit bodies 102 to a baking step, while these, positioned on the conveyor belt, advance along the production path K.

In a way in itself known, the forming unit 20 is preferably configured for enabling a production cycle in which a plurality of biscuit bodies 102 are simultaneously formed and are then released onto the conveying system 40 according to an arrangement in rows in a direction transverse to the production path K.

Production in series of the forming unit 20 hence creates on the conveying system 40 a succession of mutually parallel rows of biscuit bodies 102, which are transverse to the production path K.

The aforesaid orderly arrangement of the biscuit bodies 102 may, however, be broken up during advance of the biscuit bodies 102 along the production path K, for example in their passage from one conveyor belt 42 to the next.

In one or more preferred embodiments like the one illustrated, the system 10 hence comprises an alignment unit 50, positioned upstream of the injection unit 80 and downstream of the oven 30, and provided for arranging the biscuit bodies 102 according to a succession of orderly and parallel rows 112, which are transverse to the production path K. Within each row, the biscuit bodies 102 are perfectly aligned with one another in a direction transverse to the production path K. In addition, the alignment unit 50 can operate so as to vary the pitch between one row of biscuits and the next so as to adapt it, when necessary, to the pitch required by the injection unit 80 (for the reasons that will be understood from what follows).

Basically, the alignment unit 50 hence guarantees that the biscuit bodies 102 will be fed to the injection unit 80 according to a predefined arrangement in parallel rows, on which the injection unit 80 is then able to operate according to the modality that will be described hereinafter.

As a whole, the system 10 may thus allow a certain flexibility of operation, thanks to the use of the conveyor belts 42, but at the same time is able to ensure a precise positioning of the biscuit bodies 102 where necessary, thanks to the alignment unit 50.

The alignment unit 50 may be of any type known in the art for the alignment of products on a conveyor belt. In one or more preferred embodiments like the one illustrated, the alignment unit 50 comprises a rotor 52 that turns about a horizontal axis I, in a direction transverse to the production path K, which is provided with at least one array of radial teeth 52A distributed along the axis of rotation I and all aligned in one and the same radial plane (with reference to the axis of rotation I itself) . In operation, as a result of rotation about the axis of rotation I, the array of the teeth 52A is set in front of the biscuit bodies 102 of one and the same row conveyed by the conveyor belt 42, moving in a direction concordant with the direction of advance of the biscuit bodies 102 and at a slightly lower peripheral velocity; in this way, all the biscuit bodies 102 come into contact with the teeth 52A and are aligned with one another.

In one or more preferred embodiments like the one illustrated, the rotor 52 has two or more arrays of teeth 52A, in distinct angular positions about the axis of rotation I, which succeed one another in operating on the different rows of biscuit bodies 102 conveyed by the conveyor belt 42.

In one or more embodiments like the one illustrated, downstream of the alignment unit 50, the system 10 may comprise a station 60 for controlling the quality of the biscuit bodies 102 and possibly rejecting the ones that do not meet predefined quality requirements. In one or more preferred embodiments like the one illustrated, the quality-control and rejection station 60 comprises a camera 62 configured for filming simultaneously all the biscuit bodies 102 of one and the same row 112. In one or more preferred embodiments like the one illustrated, the camera 62 is set above the conveyor belt 42, carried by a cross member 64A of a portal structure 64 that is traversed by the conveyor belt 42 itself. Set immediately downstream of the camera 62 is a rejection unit 66, which is configured for removing from the conveyor belt 42 the so-called "non-compliant" biscuit bodies 102 (or entire rows of biscuit bodies), before the latter reach the injection unit 80.

The rejection unit 66 may be of any type known in the art for enabling rejection of products. For example, the rejection unit 66 may comprise pick-up members 67 (represented in Figure 1 as gripping members for mere illustrative purposes), designed to remove the biscuit bodies 102 from the conveyor belt 42.

In one or more preferred embodiments, control of the quality of the biscuit bodies 102 can be carried out in a totally automated way using an image-processing unit configured for processing the images acquired by the camera 62. This processing unit may, in particular, be configured for verifying whether the biscuit bodies filmed by the camera 62 meet the pre-set quality requirements.

The aforesaid quality requirements may regard one or more structural features of the individual biscuit bodies 102, as well as the arrangement of the biscuit bodies 102 within the respective row 112.

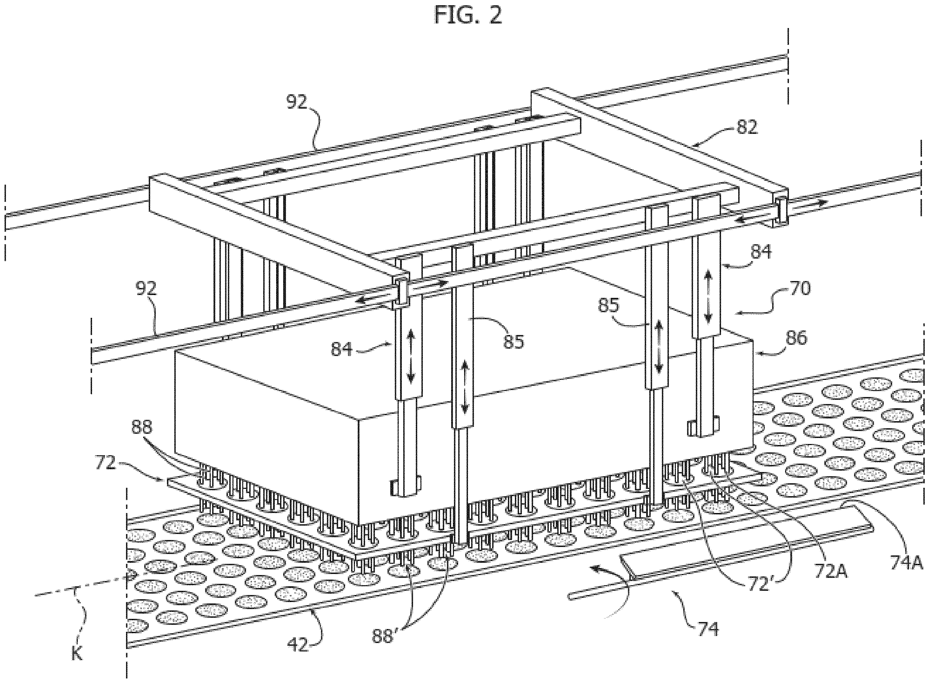

With reference now to Figures 1 and 2, the injection unit 80 is set over the conveyor belt 42 and is preferably mobile along the production path K for carrying out a movement of tracking of the biscuit bodies 102 in order to be able to inject the filling into the biscuit bodies while the latter advance along the production path K.

In operation, the injection unit 80 carries out, in particular, in a cyclic way, an operating stroke for injecting the filling into the biscuit bodies that advance along the production path K, and a return stroke, once again along the production path K, but in the opposite direction, to return into the initial position of the operating stroke, for start of a new injection step. The return stroke is performed while a new group of biscuit bodies 102 in turn reaches the aforesaid initial position of the operating stroke of the injection unit 80.

It should be noted that the aforesaid movement of the injection unit 80 enables an operation of injection of the filling to be carried out that in effect does not lengthen the cycle time of the system. In any case, it is also possible to envisage an embodiment in which the biscuit bodies 102 are fed by the conveying system of the system 10 according to a stepwise movement, and, in this case, the injection unit 80 can then operate on the biscuit bodies when these are not moving during the stationary phase of the stepwise movement.

In one or more preferred embodiments like the one illustrated, the injection unit 80 is slidably supported by two parallel raised guides 92, which extend along the production path K. The unit 80 is driven in a reciprocating movement of translation along the two guides 92 by way of a driving system (not illustrated) that may, for example, comprise an electric motor and a chain or belt system for transmission of motion.

In one or more preferred embodiments like the one illustrated, the injection unit 80 comprises an overhead-travelling-crane frame or structure 82 mobile on the two guides 92, which in turn carries a second frame or structure 84 that can be driven via an actuator (not illustrated) in a vertical movement.

Carried at the bottom end of the second frame 84 is an injection head 86, connected to which is a source for supplying the filling (not illustrated), and from which there project underneath a plurality of needles 88.

The injection head 86 is configured for setting in fluid communication the source for supplying the filling with the needles 88. In one or more preferred embodiments, the injection head 86 may, for example, be equipped with a plurality of valves (not illustrated) set between the source for supplying the filling and the needles 88 for controlling flow of the filling from the former to the latter.

Through the vertical movement of the second frame 84, the injection head 86 is mobile between a raised position away from the conveyor belt 42 and a lowered position up against the conveyor belt for injection of the filling into the biscuit bodies 102. In the passage from the raised position to the lowered position, the needles 88 are configured for penetrating the biscuit bodies 102 until their ends are brought into a substantially intermediate position of the thickness of the individual biscuit body.

In one or more preferred embodiments, the needles 88 have a diameter equal to or less than 2 mm.

Preferably, the needles 88 are made of metal (for example steel, aluminium, etc.).

In one or more preferred embodiments like the one illustrated, the injection head 86 is configured for injecting the filling into the single biscuit body 102 through a set of needles 88' (for example, three or more needles) and not through a single needle. The needles of the set are mutually parallel and positioned alongside one another according to an arrangement that can vary according to the shape of the biscuit body. In one or more preferred embodiments like the one illustrated, the needles 88 of the individual set are arranged in such a way that their respective ends are at the vertices of an ideal polygon (for example, a triangle, a square, a pentagon, etc.).

Preferably, the process of injection carried out by the injection unit 80 is set in such a way that the filling injected by the set of needles 88' comes in any case to constitute a single filling mass contained in an inner cavity of the biscuit body, obtained as a result of the process of injection itself (as represented in the biscuit of Figure 4). The aforesaid setting may, for example, regard the distribution of the needles and/or the pressure of injection of the filling, and may vary from one application to another as a function, for example, of the shape of the biscuit, of its dough, of the composition of the filling, etc. The search for the best setting may be conducted experimentally for each new application.

Preferably, the filling is delivered through the needles 88 at a pressure not lower than 3 bar.

In general, the number of the needles and their distance apart may vary according to the shape, size, and/or structure of the biscuit body 102; for example, the number of needles will be greater for a larger biscuit surface, and lower for a smaller biscuit surface.

The aforesaid process parameters may, in any case, be identified experimentally by the person skilled in the sector.

In one or more preferred embodiments like the one illustrated, the injection unit 80 is configured for carrying out an injection of the filling simultaneously on a plurality of rows 112 of biscuit bodies 102.

In particular, in one or more preferred embodiments like the one illustrated, the injection head 86 carries on it a 2D array of needles 88, made up of rows that extend in the direction of the production path K and columns that extend in the direction transverse to the production path K; each column is formed by the individual set of needles 88' described above (configured for injecting the filling into a single biscuit body) that is replicated for a number of times equal to the number of biscuit bodies 102 that make up the individual row 112, while each row is formed by the individual set of needles 88' that is replicated for a number of times equal to the number of rows 112 on which the injection process is to be carried out simultaneously.

In one or more preferred embodiments like the one illustrated, the apparatus 10 further comprises a cleaning system 70 for carrying out an action of cleaning of the needles 88.

In one or more preferred embodiments like the one illustrated, the cleaning system 70 comprises a plate 72, which is provided with a plurality of holes 72A engaged by the needles 88 and is vertically mobile, along the needles themselves, according to a reciprocating motion of translation. In one or more preferred embodiments like the one illustrated, the plate 72 has, in particular, a plurality of inserts 72' made of a material that will have properties of slidability (for example, Teflon), each defining a subset of holes 72A that are engaged by a respective set of needles 88'.

Preferably, the holes 72A and the needles 88 have one and the same nominal diameter and production tolerances such as to provide a mobile coupling; for example, it is possible to envisage a condition of tolerance in which the holes 72A have a diameter with a deviation comprised between +0.2 and +0.5 mm.

As a result of the movement of the plate 72 along the outer surfaces of the needles 88, the plate 72 performs the function of removing any possible residue of filling from the outer surfaces themselves.

In other words, the plate 72 carries out, through its holes 72A that are engaged by the needles 88, a scraping action on the outer surfaces of the needles themselves.

It should be noted that, in alternative embodiments, the entire plate 72 may be made of Teflon (or of some other plastic material with properties of slidability) and, in this case, it will not envisage the inserts referred to above.

Preferably, the plate 72 is mounted on a further frame 85 carried by the overhead-travelling-crane frame or structure 82, which can be driven in a vertical movement via an actuator (and in a way independent of the frame 84 on which the injection head 86 is mounted).

To render the action of cleaning of the needles as effective as possible, preferably the plate 72 is mobile along the entire length of the needles.

In particular, in an even more preferred embodiment, the plate 72 is mobile between an upper-limit position, where it is in contact with or, in any case, immediately adjacent to, the injection head 86, and a lower-limit position, where the plate 72 is set at a distance from the injection head 86 downwards and its bottom surface 72B is located underneath the distal ends of the needles 88.

In one or more preferred embodiments like the one illustrated, the cleaning system 70 further comprises a scraper member 74 configured for carrying out an action of scraping on the bottom surface 72B of the plate 72, to remove any possible residue of filling, when the plate 72 is in the aforesaid lower-limit position.

In one or more preferred embodiments like the one illustrated, the scraper member 74 is set separate from the injection unit 80, preferably in a position alongside the conveyor belt 42, and is mobile between a resting position off the conveyor belt 42 (illustrated in Figure 2) and an operating position in which it is set above the conveyor belt 42, in a position that can be reached by the injection unit 80.

In one or more preferred embodiments like the one illustrated, the scraper member 74 is in the form of an elongated blade provided with a longitudinal scraping edge 74A. This blade has a length equal at least to the extension of the plate 72 in the direction transverse to the production path K, and in the aforesaid operating position sets itself in a direction parallel to the aforesaid transverse direction.

In operation, the scraper member 74 is preferably stationary and carries out its scraping action on the bottom surface 72B of the plate 72 as a result of the movement of the injection unit 80, when the latter performs its return stroke before start of a new step of injection of the filling.

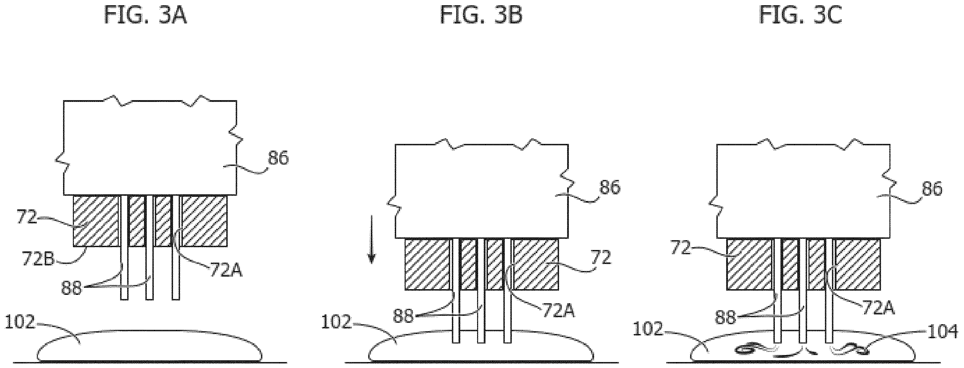

With reference now to Figures 3A to 3E, these are schematic illustrations of operation of the injection unit 80 and of the cleaning system 70 associated thereto.

At the start of a new cycle of injection of the filling, the injection head 86 is positioned with respect to the biscuit bodies 102 conveyed by the conveyor belt 42 in such a way that the sets of needles 88' are aligned vertically with respective biscuit bodies 102. As seen above, the injection head 86 carries a formation of needles 88 capable of operating simultaneously on a plurality of rows 112 of biscuit bodies 102.

Once the aforesaid relative positioning has been made between the injection unit 80 and the biscuit bodies 102, during the first step of injection of the filling the injection unit 80 will move in a fixed way with respect to the conveyor belt 42 and to the biscuit bodies 102 conveyed by the latter. In this step, the plate 72 is in its upper-limit position with respect to the needles 88.

Then, the injection head 86 is brought into its lowered position, and during this movement the needles 88 penetrate into the biscuit bodies 102.

At this point, the injection head 86 is activated to inject, via the needles 88, the filling into the biscuit bodies 102.

Once delivery of the filling is through, the injection head 86 is raised to extract the needles 88 from the biscuit bodies 102. Simultaneously, the plate 72 is moved with respect to the needles 88 towards its lower-limit position so as to set itself up against the biscuit bodies 102 and thus be able to define a contrast surface that will prevent raising of the biscuit bodies 102 from the conveyor belt 42 as a result of an action of dragging by the needles themselves. At the same time, the plate 72, moving along the needles 88, removes any possible residue of filling from the outer surface of the needles themselves.

After the needles 88 have been extracted from the biscuit bodies 102, the injection unit 80 then starts its return stroke to the initial position for start of a new injection step, and during this stroke the scraper member 74, which in the meantime has been brought into its operating position, intercepts the bottom surface 72B of the plate 72 and carries out thereon an action of scraping whereby it removes any residue of filling that has been previously removed from the needles by the plate itself.

In a way in itself known, preferably the system 10 will comprise a control unit (not illustrated) configured for controlling the various units and stations of the system according to the operation referred to above.

Of course, without prejudice to the principle of the invention, the details of construction and the embodiments may vary, even significantly, with respect to what has been illustrated herein purely by way of non-limiting example, without thereby departing from the scope of the invention, as this is defined by the annexed claims.

## Claims

1. A system (10) for the preparation of a filled biscuit, comprising:
- a forming unit (20) for forming biscuit bodies (102) in series, with a biscuit dough (101);
- a conveying system (40) for feeding the biscuit bodies (102) along a production path (K);
- an oven (30) for baking said biscuit bodies (102), which is traversed by said conveying system (40) and is configured to subject said biscuit bodies (102) to a baking process, while these are fed along said conveying system (40); and
- an injection unit (80), which is set downstream of said oven (30) with reference to said production path (K) and comprises a plurality of needles (88) for perforating simultaneously a plurality of said biscuit bodies (102) arranged on said conveying system (40) and for injecting a filling (104) into them.

2. The system according to claim 1, wherein said injection unit (80) is mobile along said production path (K) for injecting said filling (104) within said plurality of biscuit bodies (102), while these are fed along said conveying system (40).

3. The system according to claim 1 or claim 2, wherein said conveying system (40) comprises at least one mobile conveying surface (42), on which said biscuit bodies (102) rest in a free state, without being constrained in a specific position, and wherein said system (10) comprises at least one alignment unit (50), which is positioned upstream of said injection unit (80) and, preferably, downstream of said oven (30) and is configured to arrange the biscuit bodies (102) on said mobile conveying surface, according to a succession of orderly and parallel rows (112) which are transverse to said production path (K), within each row (112) said biscuit bodies (102) being aligned with one another.

4. The system according to claim 3, wherein said injection unit (80) comprises at least one formation of needles (88) that extends in a direction transverse to said production path (K), for injecting a filling (104) simultaneously within at least one row (112) of biscuit bodies of said succession of orderly and parallel rows, preferably within at least two rows of biscuit bodies.

5. The system according to any one of the preceding claims, wherein said plurality or formation of needles is divided into sets of needles (88'), each set being configured to inject said filling into a single biscuit body.

6. The system according to any one of the preceding claims, comprising a cleaning system (70) for carrying out an action of cleaning of said needles (88).

7. The system according to claim 6, wherein said injection unit (80) comprises an injection head (86), connected to which is a source for supplying the filling, and from which there project, underneath, said plurality of needles (88), and wherein said cleaning system (70) comprises a plate (72), which is provided with a plurality of holes (72A) engaged by said needles (88) and is mobile along said needles (88), according to a reciprocating motion of translation, for removing any possible residue of filling from the outer surface of said needles.

8. The system according to claim 7, wherein said holes and said needles have one and the same nominal diameter and production tolerances such as to ensure a mobile coupling between said holes and said needles.

9. The system according to claim 8, wherein said holes (72A) are delimited by inner walls made of a material having properties of slidability.

10. The system according to claim 7, wherein said plate (72) is mobile with respect to said needles (88) between an upper-limit position and a lower-limit position, in said lower-limit position a bottom surface (72B) of said plate (72) being located underneath the distal ends of said needles (88).

11. The system according to claim 10, wherein said cleaning system (70) further comprises a scraper member (74) configured to carry out an action of scraping on said bottom surface (72B) of said plate (72), for removing any possible residue of filling when said plate (72) is in said lower-limit position.

12. The system according to claim 11, wherein said scraper member (74) is mobile between a resting position, preferably alongside said conveying system (40), and an operating position where it sets itself above said conveying system (40), in a position such as to be able to intercept said plate (72), when said injection unit (80) moves along said production path (K).

13. A process for operating a system (10) according to any one of the preceding claims, comprising the steps of:
- via said forming unit (20), forming in series biscuit bodies (102), with a biscuit dough (101);
- via said conveying system (40), feeding said biscuit bodies (102) along said production path (K);
- inside said oven (30), subjecting said biscuit bodies (102) to a baking process, while said biscuit bodies (102) advance along said production path (K); and
- via said injection unit (80), perforating simultaneously a plurality of said biscuit bodies (102) arranged on said conveying system (40), and injecting a filling (104) into them.

14. The process according to claim 13, wherein, during said injection step, said plurality of biscuit bodies (102) advance along said production path (K) and said injection unit (80) moves fixedly with respect thereto along said production path (K).

15. The process according to claim 13 or claim 14, comprising, via an alignment unit (50), arranging the biscuit bodies (102) according to a succession of orderly and parallel rows (112) which are transverse to said production path (K), within each row (112) said biscuit bodies (102) being aligned with one another, and supplying said succession of orderly and parallel rows (112) of biscuit bodies (102) to said injection unit (80) .

16. The process according to claim 15, wherein said injection step includes injecting said filling simultaneously into the biscuit bodies of at least one row (112) of biscuit bodies, preferably into the biscuit bodies of at least two rows of biscuit bodies.

17. The process according to any one of claims 13 to 16, comprising, following upon said injection step, cleaning said needles via a system (70) for cleaning said needles.

18. The process according to claim 17, said system (10) being according to any one of claims 7 to 12, comprising, following upon the step of injection of said filling, extracting said needles (88) from said biscuit bodies (112) as a result of raising said injection head (86) away from said biscuit bodies (102), and
simultaneously moving said plate (72) of said cleaning system (70) into the lower-limit position, in such a way that said plate (72) sets itself up against said biscuit bodies (102) preventing any possible raising thereof as a result of an action of dragging by said needles,
wherein said movement of said plate (72) at the same time brings about an action of cleaning of the outer surface of said needles (88).

19. The process according to claim 18, comprising bringing said scraper member (74) from its resting position to its operating position, and moving said injection unit (80) in a return stroke to an initial position for start of a new injection step, wherein, as a result of the movement of said injection unit (80) in said return stroke, said scraper member (74) intercepts the bottom surface (72B) of said plate (72) in said lower-limit position and carries out thereon an action of scraping whereby it removes any possible residue of filling.
